# EUROPEAN PATENT SPECIFICATION

(11) **EP 0 684 918 B1**
(45) Date of publication and mention of the grant of the patent: **21.01.1998**
(21) Application number: 95902369.8
(22) Date of filing: 22.11.1994
(51) Int. Cl.: B62D 21/12, B62D 21/18, B62D 31/02

(54) **CHASSIS FOR A BUS**
FAHRGESTELL FÜR EINEN AUTOBUS
CHASSIS D'AUTOBUS

(30) Priority: 24.11.1993 SE 9303887
(43) Date of publication of application: 06.12.1995
(73) Proprietor: Scania CV AKTIEBOLAG, 151 87 Södertälje (SE)
(72) Inventor: BERGSTRÖM, Lars, S-633 69 Skogstorp (SE); EKLUND, Hans, S-603 70 Norrköping (SE); PETTERSSON, Johnny, S-640 23 Valla (SE)
(74) Representative: Waldebäck, Hans Olov
(86) International application number: SE9401108
(87) International publication number: WO9514603

(56) References cited:
- DE-A- 2 117 414
- DE-A- 3 151 280

## Description

The present invention relates to a chassis for a bus according to the preamble to the attached patent claim 1.

### State of the art

The design of a chassis for a bus, and more particularly the design of the chassis at the driver's compartment, is substantially determined by the type of bus concerned. Certain types of buses require that the driver's compartment be placed relatively low, e.g. double-deckers and buses with low floor height, while other types allow the driver's compartment to be placed high, e.g. long-distance buses. Accordingly the length of the driver's compartment may consist of a driver's compartment with a short or long distance from the front wheels of the bus, depending inter alia on the width of the front door aperture of the bus. Different height positions of the driver's compartment are achieved by the driver's floor being placed directly on the driver's compartment chassis or at a greater height by means of suitably chosen intermediate elements. In such cases it is necessary that the driver's compartment chassis be placed sufficiently low to be suited to the lowest positioning which arises for the type of bus.

Buses are usually manufactured in rather short production runs and it is generally desirable to be able to increase the length of production runs by increased use of standardised components which are common to several types of bus. One way of achieving this is to manufacture buses from a number of modules assembled together. Patent application AU,A, 77039/91 describes such a bus of modular construction which incorporates a number of differently designed driver's compartment modules which are intended for fastening to different front wheel modules. No further indication is given, however, as to how this may be effected in practice. With regard to the possibility of varying the height of the driver's compartment, there is no indication as to why this may be supposed to be accomplished conventionally by means of various inserts or superstructures.

A bus comprising a number of modules is described in DE-A1-31 51 280. This bus comprises three main parts, those being a front module, a rear module and a middle section. Although the floor of the middle part of the bus can be manufactured with different heights there is no solution suggested how to build the drivers compartment at different heights. This reference do not specify how the steering gear of the bus is attached to the bus chassis nor how the drivers compartment can be arranged in relation to a front wheel module.

One object of the present invention is to permit an advantageous design of bus chassis which provides the possibility of varying the height positioning therein of a driver's compartment module in a manner which is similar for several different types of bus. It thus aims to achieve the advantages which a modular structure has with regard to longer production runs and opportunities for standardisation.

### Brief description of the invention

According to the invention the objects aimed at are achieved by the driver's compartment being provided with the features indicated in the characterising part of patent claim 1.

Mounting the driver's compartment module above a steering gear module is a simple way of achieving high positioning of the driver's compartment without having to fit inserts between the chassis and the driver's floor. Fitting the driver's compartment module in this way also makes it unnecessary to adapt the front wheel module, which may therefore be identical irrespective of whether the driver's compartment is high or low.

Further characteristics and advantages which distinguish the invention are indicated by the exemplifying embodiments described below.

### List of drawings

The description refers to the attached drawings, in which
- Fig.1: shows a side view of a forward section of a bus chassis with a high-positioned driver's compartment,
- Fig.2: shows a corresponding bus chassis as seen from above,
- Fig.3: shows a detail view of a forward fastening for a driver's compartment module for the bus chassis according to Fig.1,
- Fig.4: shows a detail view of a rear fastening for the driver's compartment module according to Fig.1, and
- Fig.5: shows a side view of an alternative bus chassis with a low-positioned driver's compartment.

### Description of exemplifying embodiments

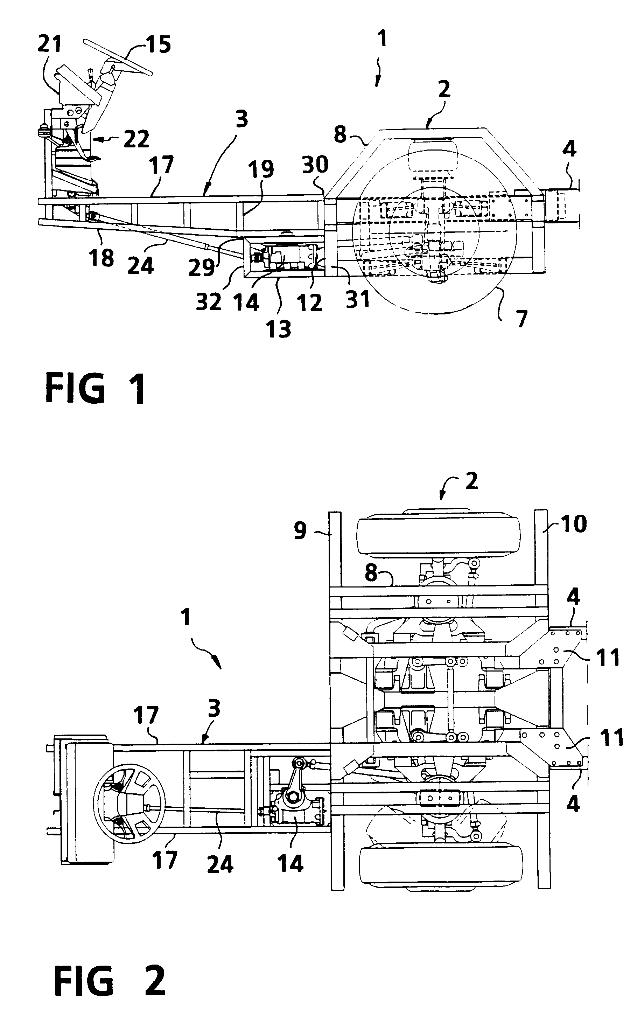

Figure 1 shows a side view of a vehicle chassis 1, more specifically the forward section of a chassis for a bus. The chassis 1 takes the form of a framework incorporating inter alia a front wheel module 2 and a driver's compartment module 3 which are of direct interest for the present invention. The use of the term "modules" for these elements indicates that it is advantageous for them to be designed as separate units, but in alternative embodiments they may be of more conventional design. The chassis 1 incorporates in a conventional manner two mutually parallel frame side beams 4 which bear at their rear ends the bus's rear wheel suspension and drive engine (not depicted), but these elements are of less significance for the invention.

The front wheel module 2 takes the form of a lattice structure with a number of mutually connected members, preferably beams with square profile shape, and forms a unit for attaching the front wheel suspension of the bus. In the region of the front wheels 7 an arched beam structure 8 extends between a forward crossbeam 9 and a rear crossbeam 10. The rear end of the front wheel module 2 is connected to the frame side beams 4 via a number of flange connections 11. In the forward end of the front wheel module 2 and adjacent to a forward surface 12 of the arched beam structure 8 there is a steering gear module 13 designed as a lattice structure and associated with one of the front wheels. This steering gear module 13 has a substantially parallelepiped shape and is firmly connected to and forms part of the front wheel module 2. The steering gear module 13 incorporates a steering gear 14 which is intended conventionally to effect steering of the front wheels 7 in response to the driver's manoeuvring of a steering wheel 15. This incorporation of the steering gear 14 in the front wheel module 2 makes it possible to design the latter as a complete unit with regard to steering geometry and wheel suspension irrespective of the type of bus in which the front wheel module 2 is intended to be incorporated. The manufacture of the front wheel module 2 may therefore be standardised. The steering gear module 13 is fitted on the right or left side of the front wheel module 2, depending on whether the bus has righthand or lefthand steering.

The bus chassis 1 depicted in Figures 1 and 2 incorporates a high-positioned driver's compartment module 3 which is placed above the steering gear module 13 and is fastened to an upper horizontal side of the latter. The driver's compartment module 3 takes the form of a lattice structure and incorporates at least two parallel longitudinal upper beams 17 and two lower beams 18 which are mutually connected via a number of crossbeams 19. It is also advantageous for these beams 17-19 to be designed with a square profile shape. The driver's compartment module 3 further incorporates an instrument panel 21, a foot control panel 22 (with pedal mountings) and the steering wheel 15. The steering wheel 15 is connected via a steering rod, ring and pinion gear and a rotatable shaft 24 to the steering gear 14 contained in the steering gear module 13 so as to be able to act on the steering gear 14. The length of the driver's compartment module 3 may easily be adapted by suitable choice of the length of the constituent beams 17,18. This does not require any adaptation of the front wheel module 2.

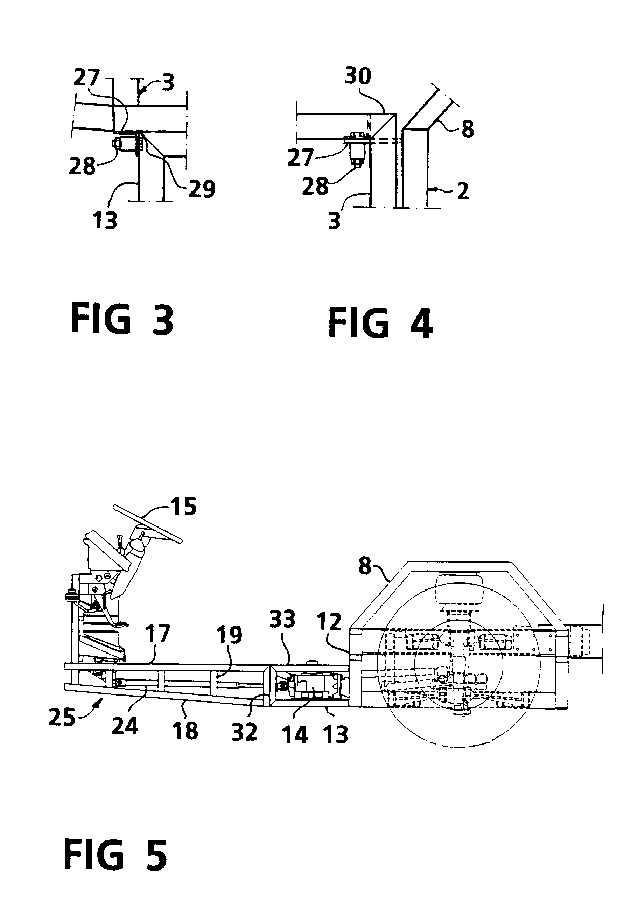

The fastening of the driver's compartment module 3 is depicted in detail in Figures 3 and 4, which show that it is by means of a number of brackets 27 or angle irons 27 and bolted connections 28, both on the upper side of the steering gear module 13, at a forward edge 29, and on the rear upper edge 30 of the driver's compartment module 3. It is advantageous for one side of the brackets/angle irons 27 to be fastened by welded connection to one of the elements 3,13 and for their other side to be fastened by bolted connection to the other element 13,3.

Figure 5 depicts an alternative design of bus with a low-positioned driver's compartment, but with the design of the bus chassis 1 otherwise similar to the chassis according to Figures 1 and 2. The same reference notations are therefore used wherever possible. The driver's compartment module 25 may be identical with the driver's compartment module 3 depicted in Figures 1 and 2 or of rather similar design albeit not identical. If they are different, the driver's compartment modules 3,25 may at least largely be composed of the same constituent beams 17-19, so great standardisation gains are still possible. In this case the driver's compartment module 25 is fastened to a forward end or a forward vertical side 32 of the steering gear module, advantageously by means of a number of bolted connections through suitably arranged holes in the beams of the driver's compartment module 25 and the steering gear module 13. The upper beams 17 of the driver's compartment module 25 are parallel with two upper beams 33 which form part of the steering gear module 13 so that these upper beams 17,33 together form a beam structure advantageously for a planar, substantially horizontal floor superstructure in the driver's compartment. Here again it is easy to adapt the length of the driver's compartment module 25 by choice of suitable length for its constituent beams 17,18. The fact that the steering gear 13 is incorporated in the front wheel module 2 obviates any adaptation of the latter.

As may be seen in Figure 1, the arched beam structure 8 of the front wheel module 2 is designed with a vertical forward beam 31, the height of which corresponds to at least the combined height of the driver's compartment module 3 and the steering gear module 13. In addition, as may be seen in Figure 5, the height of the driver's compartment modules 3,25 and the height of the steering gear module 13 are substantially the same. This means that the same front wheel module 2 may be used for both low-positioned and high-positioned driver's compartment modules 3,25.

The fastening of the driver's compartment modules 3,25 to the front wheel module 2 is intended to be a preliminary fastening during the manufacture of the bus and to be supplemented by further fastenings at the stage of the chassis 1 being fitted with a body. Above all, the forward end of the driver's compartment modules 3,25 has to be connected and fastened to the body so as to create still further rigidity.

At the stage of body fitting, the upper side of the driver's compartment modules 3,25 is provided with a covering floor. The fact that the height position of the driver's compartment modules 3,25 according to the invention may be arranged at different heights obviates any inserts or superstructures such as are otherwise conventional. This not only simplifies bus manufacture but also gives the driver's compartment a sturdier floor, with inter alia improved facilities for simple but nevertheless stable fastening of a driving seat. It also means that the forward end of the bus needs not be made lower than necessary, which might otherwise impair bus usability on very uneven road surfaces.

## Claims

1. Chassis for a bus incorporating a front wheel module (2), the forward end of which is provided with a steering gear module (13) which extends forwards and a driver's compartment module (3) fastened to the front wheel module (2),
**characterised** in that the steering gear module (13) is of substantially parallelepiped shape and, that the driver's compartment module (3) is fastened to an upper horizontal side of the steering gear module (13), thereby placing the driver's compartment module (2) in a high position on the chassis (1).

2. Chassis for a bus according to patent claim 1,
**characterised** in that both the driver's compartment module (3) and the steering gear module (13) are designed as lattice structures consisting of a number of mutually connected beams (17-19,33) and that a lower beam (18) forming part of the driver's compartment module (3) is arranged on the upper horizontal side of the steering gear module (13).

3. Chassis for a bus according to patent claim 1,
**characterised** in that the height of the rear end of the driver's compartment module (3) and the height of the steering gear module (13) are substantially the same.

4. Chassis for a bus according to patent claim 1 in which the front wheel module (2) incorporates at least in the region of one front wheel (7) of the bus an arched beam structure (8) with two mutually parallel forward beams (31) which are substantially vertical and have the steering gear module (13) fastened to their respective forward sides (12),
**characterised** in that the driver's compartment module (3) has its rear upper edge (30) fastened to the forward sides (12) of the forward beams (31) and its lower side fastened to the forward upper edge (29) of the steering gear module (13).

5. Chassis for a bus according to patent claim 4,
**characterised** in that the height of the vertical beams (31) is at least twice the height of the steering gear module (13).

6. Chassis for a bus according to patent claim 1, 4 or 5,
**characterised** in that the driver's compartment module (3) is fastened to the steering gear module (13) by means of bolted connections (28).

## Patentansprüche

1. Fahrgestell für einen Bus, das ein Vorderradmodul (2), dessen vorderes Ende mit einem sich nach vorne erstreckenden Lenkungsmodul (13) versehen ist, und ein am Vorderradmodul (2) befestigtes Führerhausmodul (3) aufweist,
dadurch gekennzeichnet, daß das Lenkungsmodul (13) eine im wesentlichen quaderförmige Gestalt hat und daß das Führerhausmodul (3) an einer oberen, horizontalen Seite des Lenkungsmoduls (13) befestigt ist, wodurch das Führerhausmodul (3) in einer erhöhten Stellung auf dem Fahrgestell (1) angeordnet ist.

2. Fahrgestell für einen Bus nach Anspruch 1,
dadurch gekennzeichnet, daß sowohl das Führerhausmodul (3) und das Lenkungsmodul (13) als Gitterstrukturen ausgeführt sind, die aus einer Reihe von miteinander verbundenen Trägern (17 - 19, 33) bestehen und daß ein unterer Träger (18), der einen Teil des Führerhausmoduls (3) bildet, auf der oberen, horizontalen Seite des Lenkungsmoduls (13) angeordnet ist.

3. Fahrgestell für einen Bus nach Anspruch 1,
dadurch gekennzeichnet, daß die Höhe des rückwärtigen Endes des Führerhausmoduls (3) und die Höhe des Lenkungsmoduls (13) im wesentlichen gleich sind.

4. Fahrgestell für einen Bus nach Anspruch 1,
bei dem das Vorderradmodul (2) zumindest im Bereich des einen Vorderrades (7) des Busses eine gewölbte Trägeranordnung (8) mit zwei zueinander parallelen, vorderen Trägern (31) aufweist, die im wesentlichen vertikal sind und das Lenkungsmodul (13) an ihrer jeweils vorderen Seite (12) befestigt haben,
dadurch gekennzeichnet, daß das Führerhausmodul (3) seinen hinteren oberen Rand (30) an den vorderen Seiten (12) der vorderen Träger (31) befestigt hat und seine Unterseite an dem vorderen, oberen Rand (29) des Lenkungsmoduls (13) befestigt hat.

5. Fahrgestell für einen Bus nach Anspruch 4,
dadurch gekennzeichnet, daß die Höhe der vertikalen Träger (31) mindestens das Doppelte der Höhe des Lenkungsmoduls (13) beträgt.

6. Fahrgestell für einen Bus nach Anspruch 1, 4 oder 5,
dadurch gekennzeichnet, daß das Führerhausmodul (3) durch Schraubverbindungen (28) an dem Lenkungsmodul (13) befestigt ist.

## Revendications

1. Châssis pour un bus comprenant un module de roues avant (2), dont l'extrémité avant est munie d'un module de mécanisme de direction (13) qui s'étend vers l'avant et d'un module de compartiment du conducteur (3) fixé au module de roues avant (2), caractérisé en ce que le module de mécanisme de direction (13) est de forme sensiblement parallélépipédique et en ce que le module de compartiment du conducteur (3) est fixé sur un côté supérieur horizontal du module de mécanisme de direction (13), de manière à disposer le module de compartiment du conducteur (3) en position élevée sur le châssis (1).

2. Châssis pour un bus selon la revendication 1, caractérisé en ce que le module de compartiment du conducteur (3) et le module de mécanisme de direction (13) sont tous les deux conçus comme des structures en treillis constituées de plusieurs poutres reliées entre elles (17-19, 33) et en ce que une poutre inférieure (18), faisant partie du module de compartiment du conducteur (3), est disposée sur la face supérieure horizontale du module de mécanisme de direction (13).

3. Châssis pour un bus selon la revendication 1, caractérisé en ce que la hauteur de l'extrémité arrière du module de compartiment du conducteur (3) et la hauteur du module de mécanisme de direction (13) sont sensiblement les mêmes.

4. Châssis pour un bus selon la revendication 1, dans lequel le module de roues avant (2) comporte, au moins dans le secteur d'une roue avant (7) du bus, une structure à poutre courbée (8), avec deux poutres avant (31) parallèles entre elles et sensiblement verticales, le module de mécanisme de direction (13) étant relié à leurs côtés avant respectifs (12), caractérisé en ce que le bord supérieur arrière (30) du module de compartiment du conducteur (3) est fixé aux côtés avant (12) des poutres avant (31), son côté inférieur étant fixé au bord supérieur avant (29) du module de mécanisme de direction (13).

5. Châssis pour un bus selon la revendication 4, caractérisé en ce que la hauteur des poutres verticales (31) est égale au moins au double de celle du module de mécanisme de direction (13).

6. Châssis pour un bus selon la revendication 1, 4 ou 5, caractérisé en ce que le module de compartiment du conducteur (3) est fixé au module de mécanisme de direction (13) au moyen de liaisons boulonnées (28).
